# EUROPÄISCHE PATENTSCHRIFT

(11) **EP 3 045 332 B1**
(45) Veröffentlichungstag und Bekanntmachung des Hinweises auf die Patenterteilung: **18.07.2018**
(21) Anmeldenummer: 15202432.9
(22) Anmeldetag: 23.12.2015
(51) Int. Cl.: B60H 1/34, B64D 13/00

(54) **LUFTDÜSE**
AIR NOZZLE
BUSE D'AIR

(30) Priorität: 16.01.2015 DE 102015000256
(43) Veröffentlichungstag der Anmeldung: 20.07.2016
(73) Patentinhaber: Dr. Schneider Kunststoffwerke GmbH, 96317 Kronach (DE)
(72) Erfinder: Endres, Gerhard, 95336 Mainleus (DE)

(56) Entgegenhaltungen:
- WO-A1-00/63037
- DE-B3-102010 032 233
- DE-C1- 19 701 499
- GB-A- 1 310 493
- GB-A- 1 396 993

## Beschreibung

Die vorliegende Erfindung betrifft eine Luftdüse, umfassend wenigstens eine Gelenkverbindung.

Aus dem Stand der Technik sind herkömmliche Luftdüsen zur Belüftung des Fahrzeuginnenraumes bekannt, bei welchen die häufig als Lamellen ausgebildeten Luftleitelemente horizontal oder vertikal verstellbar ausgebildet sind, um dem Belüftungsstrom in den Fahrzeuginnenraum kontrolliert zu steuern. Soll hingegen der Luftstrom gänzlich unterbrochen werden, so bedarf es der Betätigung eines weiteren Schaltelements, meist in Form eines Stellrades. Folglich wird für bekannte Luftdüsen eine Vielzahl an unterschiedlichen Bauteilen benötigt, welche alle aufeinander abzustimmen sind. Daher ist der Herstellungsaufwand relativ aufwändig und kostenintensiv.

Darüber hinaus bedingt die Vielzahl an Bauteilen, dass sich diese im Laufe des Lebenszyklus derartiger Luftdüsen verziehen oder abnutzen. Folglich ist das Zusammenspiel insbesondere nach längerem Gebrauch nicht mehr zu gewährleisten. Als Folgen tauchen Vibrations- oder Klappergeräusche auf. Zusätzlich besteht die Gefahr, dass sich die Luftleitelemente aufgrund der Fahrtvibrationen eigenmächtig, also ungewollt, verstellen, da die Bauteile nicht mehr homogen ineinander greifen. Somit wird die kontrollierte Luftstromführung deutlich erschwert.

WO 00/63037 A1 offenbart eine Belüftungseinrichtung für ein Fahrzeug mit einem rohrförmigen Luftkanal, in dem ein Belüftungskörper an einem zentralen Abschnitt einer ersten Scheibe verschwenkbar gelagert ist. Die Scheibe weist Öffnungen auf und ist verdrehbar gelagert, so dass die Öffnungen mit weiteren Öffnungen einer zweiten parallel verlaufenden Scheibe zur Bereitstellung eines Luftstroms fluchten können. Der zentrale Abschnitt erstreckt sich von der ersten Scheibe und weist an seinem abstehenden Ende einen Verbindungsabschnitt für den Belüftungskörper auf. Der Verbindungsabschnitt weist eine polygonale Öffnung auf, in welcher ein Bedienelement mit einem korrespondierenden Abschnitt zum Verdrehen der ersten Scheibe aufgenommen ist. Der zentrale Abschnitt ist hohl ausgebildet und ist auf einen Lagerzapfen der zweiten Scheiben aufgesteckt und über eine Rast im Verbindungsabschnitt mit der ersten Scheiben verbunden.

GB 1 310 493 A offenbart ebenfalls eine Belüftungseinrichtung mit einem rohrförmigen Luftkanal, wobei ein sternförmiges Belüftungselement über eine Stange sowie ein erstes Kugelgelenk und ein zweites Kugelgelenk mit einer Schließklappe gekoppelt ist. Das Belüftungselement ist verdrehbar gelagert, wobei eine Rotation des Belüftungselements ein Verschwenken der Schließklappe bewirkt.

Die Aufgabe der vorliegenden Erfindung besteht darin, eine Luftdüse bereitzustellen, bei welcher die Klapperfreiheit und Bewegungskraft ohne weitreichende Abstimmung der einzelnen Bauteilkomponenten einstellbar ist. Ferner ist es auch Aufgabe der vorliegenden Erfindung, eine Luftdüse mit verminderter Bauteilanzahl sowie mit nachträglich einstellbaren Bedienkräften bereitzustellen.

Diese Aufgabe löst die erfindungsgemäße Luftdüse nach Anspruch 1. Hierzu erweist sich die beschriebene Luftdüse insbesondere als vorteilhaft, da sie eine überschaubare Teileanzahl aufweist, eine einfache Bedienung zur Einstellung des austretenden Luftstromes, eine Reduzierung der Abstimmschleifen beim Industrialisieren der Werkzeuge und ein schnelles Reagieren bzw. Abändern der Bedienkräfte in Abhängigkeit des Kundenwunsches ermöglicht.

Die vorliegende Erfindung umfasst eine Luftdüse, welche wenigstens ein Luftdüsengehäuse, welches zur zumindest teilweisen Aufnahme eines Gelenkpfannenabschnitts ausgebildet ist, wobei das Luftdüsengehäuse wenigstens einen hülsenartigen Abschnitt zur zumindest teilweisen Aufnahme des Gelenkpfannenabschnitts umfasst, weiterhin wenigstens ein Aufsatzelements zur Richtungsleitung eines austretenden Luftstromes, welches wenigstens einen Gelenkkopf umfasst, weiterhin einen Gelenkpfannenabschnitt, welcher an einem ersten freien Ende wenigstens eine Gelenkpfanne zur zumindest teilweisen Aufnahme des Gelenkkopfes, sowie einen daran anschließenden Verlängerungsabschnitt umfasst, wobei der Verlängerungsabschnitt derart ausgebildet ist, dass er zumindest teilweise in dem hülsenartigen Abschnitt des Luftdüsengehäuses anordenbar ist und Gelenkkopf und Gelenkpfanne als Gelenkverbindung ausgebildet sind.

Ferner umfasst die Luftdüse ein Befestigungselement zur Fixierung des Gelenkpfannenabschnitt in dem hülsenartigen Abschnitt, wobei der Verlängerungsabschnitt an seinem der Gelenkpfanne gegenüberliegenden freien Ende wenigstens eine Materialverjüngung aufweist. Im Bereich des freien Endes der Materialverjüngung ist wenigstens ein Vorsprung angeordnet, wobei das Befestigungselement auf die Materialverjüngung und auf den wenigstens einen Vorsprung aufsteckbar ist.

Der Kern der Erfindung liegt in der Konzeption und der Einfachheit der erfindungsgemäßen Luftdüse. Vorteilhaft ist die erfindungsgemäße Luftdüse insbesondere zum Leiten von Luftströmen für Heizungs-, Klima- oder Belüftungsanlagen in Kraftfahrzeugen ausgebildet und hierzu zu verwenden.

Die Luftdüse umfasst vorteilhaft wenigstens ein Luftdüsengehäuse und/oder eine Aufnahme, welche in einem Luftdüsengehäuse anordenbar ist, welche(s) weiterhin vorteilhaft zur zumindest teilweisen Aufnahme des ersten Gelenkelements, welches vorteilhaft als Gelenkpfanne und/oder Gelenkpfannenabschnitt ausgebildet ist, ausgebildet ist.

Das Luftdüsengehäuse bildet einen ersten Grundbestandteil der hier beschriebenen Luftdüse. Es stellt die Verbindung zwischen Luftdüse und Kraftfahrzeug dar und ist beispielsweise mit einem Armaturenbrett eines Kraftfahrzeuges verbindbar ausgebildet. Der den Fahrzeuginnenraum belüftende Luftstrom tritt von der Rückseite des Luftdüsengehäuses in dieses ein. Unter Rückseite ist hierbei vorteilhaft die verbaute Seite zu verstehen, mit welcher die Luftdüse beispielsweise an Heizungs-, Klima- oder Belüftungsanlagen eines Kraftfahrzeuges angeschlossen ist. Es ist durchaus üblich, dass die seitlichen Bereiche des Luftdüsengehäuses beispielsweise aus dem Armaturenbrett hervorstehend angeordnet sind.

Das Luftdüsengehäuse und/oder die Aufnahme zur Fixierung am Gehäuse umfasst weiterhin einen hülsenartigen Abschnitt, welcher weiterhin vorteilhaft mittig zentriert angeordnet ist. Der hülsenartige Abschnitt ist zumindest teilweise hohl ausgebildet und dient zur zumindest teilweisen Aufnahme des Gelenkpfannenabschnitts.

Bei der erfindungsgemäßen Luftdüse ist der Gelenkpfannenabschnitt zumindest teilweise in den hülsenartigen Abschnitt des Luftdüsengehäuses einführbar und/oder arretierbar ausgebildet. Der hülsenartige Abschnitt ist als Kopplungselement zwischen Luftdüsengehäuse und Gelenkpfannenabschnitt ausgebildet. Im einfachsten Fall ist der hülsenartige Abschnitt einteilig mit dem Luftdüsengehäuse ausgebildet, beispielsweise in einem Spritzgußverfahren hergestellt oder aber auch mit dem Luftdüsengehäuse verklebt oder dgl.

Weiterhin ist es denkbar, dass der hülsenartige Abschnitt lösbar an der Luftdüse angeordnet ist, beispielsweise aufsteckbar. So kann beispielsweise der hülsenartige Abschnitt als separates Bauteil vorgesehen sein, beispielsweise als Einsatzelement.

Der Gelenkpfannenabschnitt umfasst an einem ersten freien Ende wenigstens eine Gelenkpfanne zur zumindest teilweisen Aufnahme des Gelenkkopfes des Aufsatzelementes. Weiterhin schließt sich an die Gelenkpfanne ein Verlängerungsabschnitt an, so dass der Gelenkpfannenabschnitt vorteilhaft einteilig ausgebildet ist.

Der Verlängerungsabschnitt ist in seiner Geometrie derart ausgebildet, dass er zumindest teilweise in den hülsenartigen Abschnitt des Luftdüsengehäuses bzw. der Aufnahme anordenbar ist. Vorteilhaft ist er in seinem äußeren Durchmesser variabel ausgebildet. Vorteilhaft ist er derart ausgebildet, dass er in den als zumindest teilweisen Hohlkörper ausgebildeten hülsenartigen Abschnitt größtenteils, vorteilhafter vollständig, einführbar ist. Folglich ist der Außendurchmesser des Verlängerungsabschnittes vorteilhaft kleiner zu dem Innendurchmesser des hülsenartigen Abschnitts ausgebildet.

Allerdings ist dies ebenfalls nicht begrenzend zu verstehen, da es auch denkbar ist, den Außendurchmesser des Verlängerungsabschnittes größer als den Innendurchmesser des hülsenartigen Abschnitts auszubilden. Dies ist insbesondere dann der Fall, wenn der Verlängerungsabschnitt aus einem elastischen und/oder deformierbarem Material ausgebildet ist, beispielsweise aus einem Elastomer wie Gummi oder Kautschuk. Dann wird der Verlängerungsabschnitt bei Einführung in den hülsenartigen Abschnitt mit einer Druckkraft beaufschlagt, welche zu dessen Deformation führt. Ist der Verlängerungsabschnitt allerdings in der vorbestimmten Tiefe innerhalb des hülsenartigen Abschnitts angeordnet, so kann das elastische Material entsprechend wieder expandieren und bildet folglich eine Fixierung und Halterung aus.

Ferner umfasst die hier beschriebene Luftdüse wenigstens ein Aufsatzelement, welches weiterhin wenigstens ein Luftleitelement umfassen kann. Es ist beispielsweise denkbar, dass das Aufsatzelement mehrere Luftleitelemente, welche im einfachsten Fall als Lamellen ausgebildet sind, aufweist. Es hat sich bei der vorliegenden Luftdüse als vorteilhaft erwiesen, dass die Luftleitelemente strahlenförmig auseinanderlaufend ausgebildet sind. Das Aufsatzelement dient zur Richtungsleitung des austretenden Luftstromes, beispielsweise in einen Fahrzeuginnenraum. Erfindungsgemäß umfasst das Aufsatzelement weiterhin, an der dem Fahrzeuginnenraum abgewandten Seite, wenigstens ein Gelenkelement, beispielsweise einen Gelenkkopf. Vorteilhaft ist der Gelenkkopf zentriert und/oder mittig an dem Aufsatzelement angeordnet.

Zur Ausbildung der Gelenkverbindung zwischen Aufsatzelement und Luftdüsengehäuse sowie zur Anordnung von Aufsatzelement und Luftdüsengehäuse stehen die beiden Gelenkelemente - Gelenkkopf und Gelenkpfanne und/oder Gelenkkopf und Gelenkpfannenabschnitt - miteinander in Wirkverbindung, so dass eine Kopplung zwischen Aufsatzelement und Luftdüsengehäuse ausgebildet ist. Vorteilhaft ist hierzu der Gelenkkopf zumindest teilweise innerhalb der Gelenkpfanne angeordnet und/oder innerhalb der Gelenkpfanne rotierbar angeordnet.

Es hat sich hierbei als vorteilhaft erwiesen, beide Gelenkelemente jeweils zentrisch und/oder deckungsgleich innerhalb des Luftdüsengehäuses und des Aufsatzelementes anzuordnen, so dass im zusammengeführten Zustand von Luftdüsengehäuse und Aufsatzelement eine funktionsfähige Luftdüse zur Leitung eine Luftstromes in den Fahrzeuginnenraum bedingt wird und zugleich die beiden Gelenkelemente in Wirkverbindung stehen und zumindest teilweise ineinandergreifen. Dies wird durch die zueinander komplementäre Geometrie von Gelenkkopf und Gelenkpfanne sichergestellt.

Es hat sich als besonders vorteilhaft erwiesen, die Gelenkverbindung als Kugelgelenk auszubilden, welches von einer Gelenkpfanne (erstes Kugelgelenk) einerseits und von einem Gelenkkopf (zweites Kugelgelenk) andererseits ausgebildet wird. Selbstverständlich ist dies nicht begrenzend zu verstehen, so dass auch andere Gelenkverbindungen, wie beispielsweise Kreuzgelenk oder Drehgelenk, unter dem Begriff Gelenkverbindung zu verstehen sind.

Vorteilhaft stehen erstes Gelenkelement und zweites Gelenkelement in Wirkverbindung. Zur Ausbildung der Gelenkverbindung ist vorteilhaft der Gelenkkopf zumindest teilweise innerhalb der Gelenkpfanne angeordnet und wird vorteilhaft von dieser gehalten. Je nachdem, wie fest und/oder stark der Gelenkkopf von der Gelenkpfanne gehalten wird, resultiert eine entsprechende Haftreibung, über welche die Betätigungskraft des Aufsatzelementes einstellbar ist. Ist die Gelenkverbindung als Kugelgelenk ausgebildet, handelt es sich um ein dreiachsiges Gelenk mit dem höchsten Freiheitsgrad.

Wie oben bereits kurz beschrieben, erfolgt die Wirkverbindung des Kugelgelenks durch die Interaktion von Gelenkkopf und Gelenkpfanne, wobei der Gelenkkopf zumindest teilweise innerhalb der Gelenkpfanne angeordnet ist und von dieser zumindest teilweise umgriffen wird. Insbesondere erfolgt das Umgreifen derart, dass der Gelenkkopf in dem gewünschten Bewegungsspielraum auch innerhalb der Gelenkpfanne von dieser gehalten wird und ein unerwünschtes Herausgleiten unterbunden ist.

Darüber hinaus stellt die Kugelgelenkverbindung die Möglichkeit dar, das Aufsatzelement, welches über die Gelenkverbindung zumindest teilweise innerhalb des Luftdüsengehäuses angeordnet ist, beliebig zu verstellen, ohne dass ein unerwünschter seitlicher Austritt des zu führenden Luftstroms bedingt wird.

Je nach geometrischer Ausführung des Luftdüsengehäuses kann das zumindest teilweise innerhalb der Gelenkpfanne angeordnete Aufsatzelement um den Kugelkopf verdreht werden. Es wirkt lediglich die Außenwandung des Luftdüsengehäuses als begrenzender Bewegungsfaktor.

Es hat sich weiter als vorteilhaft erwiesen, den Gelenkkopf zumindest teilweise kugelförmig auszubilden Durch diese zumindest teilweise kugelförmige Ausbildung wird die Beweglichkeit des Aufsatzelementes innerhalb des Luftdüsengehäuses deutlich erhöht, so dass auch der aus der Luftdüse in den Fahrzeuginnenraum austretenden Luftstrom leichter und kontrollierbarer geführt werden kann.

Der Gelenkkopf ist bei einer vorteilhaften Ausführungsform fest mit dem Aufsatz verbunden, beispielsweise in einem einzigen Herstellungsschritt ausgebildet.

Insbesondere erfolgt keine Richtungseinschränkung, so dass das Aufsatzelement über den Gelenkkopf innerhalb der Gelenkpfanne in jegliche Richtung verschwenkbar und frei rotierbar angeordnet ist. Um stets den austretenden Luftstrom aus dem Aufsatzelement kontrolliert leiten zu können, ist das Aufsatzelement im ausgebildeten Zustand der Gelenkverbindung zwischen Gelenkkopf und Gelenkpfanne, zumindest teilweise innerhalb des Luftdüsengehäuses angeordnet, so dass sich auch bei größtmöglicher Verschwenkung des Aufsatzelements kein seitlicher Spalt zwischen Luftdüsengehäuse und Aufsatzelement bedingt, durch welchen der Luftstrom unkontrolliert und unerwünscht entweichen kann.

Ferner ist denkbar, den Gelenkkopf wenigstens als Halbkugel, vorteilhafter als Dreiviertelkugel auszubilden. Insbesondere ist die Dreiviertelkugel vorteilhaft für die Bewegungsfreiheit des Aufsatzelementelementes. Allerdings ist auch denkbar, den Gelenkkopf als vollständige Kugel auszubilden und mit dem Aufsatzelement beispielsweise direkt oder über eine Steckverbindung zu verbinden.

Die Luftdüse weist zudem das Befestigungselement zur Fixierung von Aufsatzelement mit dem Luftdüsengehäuse auf. Dies ist von Vorteil, da das wenigstens eine Befestigungselement ein kontrollierbares Ineinandergreifen von Gelenkkopf und Gelenkpfanne ermöglicht. Mit Hilfe des Befestigungselements wird die Betätigungskraft des Aufsatzelementes eingestellt.

Das Vorsehen wenigstens eines Befestigungselementes dient der (lösbaren) Fixierung des Gelenkpfannenabschnitts, genauer gesagt des Verlängerungsabschnitts, innerhalb des hülsenartigen Abschnitts. Ferner ist das Befestigungselement auch dazu ausgebildet, sowohl Gelenkpfannenabschnitt und hülsenartigen Abschnitt am dem Luftdüsengehäuse lösbar anzuordnen und zu fixieren. Über diese Fixierung erfolgt zugleich auch die Einstellung der Betätigungskraft des Aufsatzelementes.

Zur Einsparung von Bauteilen sowie zur einfachen Montage der Luftdüsenbauteile hat es sich als vorteilhaft erwiesen, dass das Befestigungselement von der Rückseite des Luftdüsengehäuses her einführbar ist. Das Luftdüsengehäuse weist hierzu eine durchgängige Öffnung auf, durch welche das wenigstens eine Befestigungselement hindurch geführt wird. Im einfachsten Fall ist diese Öffnung im Luftdüsengehäuse deckungsgleich mit einer korrespondierenden Öffnung des hülsenartigen Abschnitts.

Da der Verlängerungsabschnitt der Gelenkpfanne an seinem der Gelenkpfanne gegenüberliegenden freien Ende wenigstens eine Materialverjüngung aufweist, wobei die Materialverjüngung fest am Verlängerungsabschnitt angeordnet, vorteilhaft einteilig mit diesem ausgebildet ist. Im einfachsten Fall ist die Materialverjüngung als zylindrische Verlängerung des Verlängerungsabschnitts ausgebildet und erstreckt sich in Längsrichtung des Verlängerungsabschnittes. Die Materialverjüngung ist durch die Öffnungen des hülsenartigen Abschnitts und der Rückseite des Luftdüsengehäuses hindurchführbar und steht über Letztere hinaus. Der Verlängerungsabschnitt selbst weist keine Öffnung zum Einführen eines Befestigungselements auf. In dieser Ausführung ist die zylindrische Materialverjüngung vorteilhaft derart angeordnet, dass diese durch die beiden deckungsgleichen Öffnungen von Luftdüsengehäuse und hülsenartigen Abschnitt durchführbar ist.

Der Gelenkpfannenabschnitt mit Durchführung der Materialverjüngung ist noch lose im hülsenartigen Abschnitt angeordnet. Zur Fixierung des Gelenkpfannenabschnitts und zur Einstellung der Betätigungskraft der Kugelgelenkverbindung umfasst die Materialverjüngung wenigstens einen Vorsprung. Vorteilhaft sind zwei Vorsprünge auf gleicher Höhe angeordnet und erstrecken sich jeweils radial nach außen.

Dies ist selbstverständlich nicht begrenzend zu verstehen, so dass es auch denkbar ist, dass die beiden Vorsprünge in Längsrichtung der Materialverjüngung versetzt zueinander angeordnet sind. Auch ist denkbar, mehr als zwei Vorsprünge vorzusehen, beispielsweise drei bis sechs.

Das Befestigungselement ist auf die Materialverjüngung und auf den wenigstens einen Vorsprung aufsteckbar ausgebildet. Dieses ist vorteilhaft, um ebenfalls den Durchmesser der Gelenkpfanne, vorteilhaft indirekt und/oder direkt, zu reduzieren. Hier hat es sich als vorteilhaft erwiesen, als Befestigungselement eine Feinrast vorzusehen, so dass das erzeugte Drehmoment definierbar ist. Vorteilhaft ist das Fixierungselement als Mutter ausgebildet. Vorteilhaft werden die Formulierungen Fixierungselement und Befestigungselement synonym verwendet.

Das Befestigungselement wird nach der Anordnung des Gelenkpfannenabschnitts im hülsenartigen Abschnitt auf die Materialverjüngung zunächst aufgesteckt. Besonders vorteilhaft weist das Befestigungselement, neben der zentralen Öffnung, durch welche es auf die Materialverjüngung aufsteckbar ist, wenigstens eine weitere Öffnung, vorteilhaft auch mehrere Öffnungen, auf, durch welche der wenigstens eine Vorsprung der Materialverjüngung zumindest einführbar und/oder durchführbar ist. Das Befestigungselement wird beim Aufstecken auf die Materialverjüngung in Abhängigkeit der Vorsprünge derart ausgerichtet, dass wenigstens ein Vorsprung durch eine dafür vorgesehene weitere Öffnung einführbar und/oder hindurchführbar ist. Weitere vorteilhafte Ausführungsformen ergeben sich aus den Unteransprüchen.

Zur Fixierung des Gelenkpfannenabschnitts in dem hülsenartigen Abschnitt, weist der Verlängerungsabschnitt eine weitere, vorteilhaft deckungsgleich ausgebildete Öffnung wie der hülsenartige Abschnitt auf.

Bei einer weiteren vorteilhaften Ausführungsform ist der hülsenartige Abschnitt an einem freien Ende konisch und/oder konvex und/oder konkav gekrümmt ausgebildet. Das freie Ende ist hierbei am gegenüberliegenden freien Ende des hülsenartigen Abschnitts angeordnet, welches der Öffnung zum Einführen des Befestigungselements gegenüberliegt.

Für eine funktionsfähige Luftdüse ist der Gelenkpfannenabschnitt zumindest teilweise in dem hülsenartigen Abschnitt des Luftdüsengehäuses angeordnet. Vorteilhaft wird hierbei die Gelenkpfanne zumindest teilweise von dem hülsenartigen Abschnitt umgriffen. Es ist zudem denkbar, dass zwischen hülsenartigem Abschnitt und Gelenkpfanne ein Spalt ausgebildet ist. Dieser ist für die Ausrichtung der Gelenkpfanne von Vorteil.

Der hülsenartige Abschnitt weist folglich eine ähnliche geometrische Ausbildung wie der Gelenkpfannenabschnitt auf. Zusätzlich weist der hülsenartige Abschnitt an seinem freien Ende einen zumindest teilweise konisch und/oder konvex und/oder konkav gekrümmt ausgebildeten Bereich auf. Ist der Gelenkpfannenabschnitt in den hülsenartigen Abschnitt lose eingeführt, so umschließt das freie Ende des hülsenartigen Abschnitts die zumindest teilweise darin angeordnete Gelenkpfanne. Bei einer weiteren vorteilhaften Ausführungsform ist die Gelenkpfanne in ihrem Durchmesser direkt und/oder indirekt veränderbar ausgebildet. Bei der Erfindung hat es sich als vorteilhaft erwiesen, die Betätigungskraft, mit welcher das Aufsatzelement vorteilhaft zumindest teilweise innerhalb des Luftdüsengehäuses rotierbar ist und mit welcher der austretende Luftstrom im Fahrzeuginnenraum gerichtet werden kann, über die Gelenkverbindung, vorteilhaft über das Kugelgelenk, vorteilhaft über den veränderten Außen- und/oder Innendurchmesser der Gelenkpfanne, zu steuern.

Diese Veränderung des Durchmessers, insbesondere des Innendurchmessers der Gelenkpfanne, ist vorteilhaft, um die Betätigungskraft des Aufsatzelements individuell einzustellen. Ist beispielsweise der Durchmesser der Gelenkpfanne zu groß gewählt im Vergleich zum Durchmesser des zumindest teilweise kugelförmigen Gelenkkopfes, so rutscht der Gelenkkopf innerhalb der Gelenkpfanne und es kommt keine Wirkverbindung zwischen den beiden Gelenkelementen zustande. Die Luftdüse ist nicht funktionsfähig.

Ist allerdings der Durchmesser, insbesondere der Innendurchmesser, der Gelenkpfanne zu klein gewählt, so besteht die Gefahr, dass der Gelenkkopf einerseits gar nicht in die Gelenkpfanne einführbar ist oder, dass, andererseits, der Gelenkkopf derart fest von der Gelenkpfanne umschlossen wird, so dass zwar eine Wirkverbindung ausgebildet wird, aber eine freie Beweglichkeit des Gelenkkopfes unterbunden ist. Beides spricht gegen die Funktionalität der hier beschriebenen Luftdüse.

Aus diesem Grund ist es von Vorteil, den Durchmesser, insbesondere den Innendurchmesser, der Gelenkpfanne variabel auszubilden. Dies wird vorteilhaft dadurch erreicht, dass die Gelenkpfanne wenigstens eine sich in Längserstreckung des Gelenkpfannenabschnitts erstreckende Öffnung aufweist. Vorteilhaft sind mehrere dieser Öffnungen, beispielsweise zwei bis acht, vorgesehen. Zwischen diesen Öffnungen sind Wandungsbereiche ausgebildet, welche bei Kraftbeaufschlagung auslenkbar ausgebildet sind. Die dazwischen liegenden Öffnungen, welche vorteilhaft schlitzartig ausgebildet sind, bedingen Freiräume, in welche die Wandungsabschnitte bei Kraftbeaufschlagung verbringbar sind. Hierdurch kann in geschickter Weise eine reversible Reduzierung des Außen- und/oder Innendurchmessers der Gelenkpfanne ausgebildet werden, ohne dass es zu Materialrissen oder Überbeanspruchung kommt.

Die Veränderung des Durchmessers, insbesondere des Innendurchmesser der Gelenkpfanne, kann direkt und/oder indirekt erfolgen. Als direkte Veränderung ist beispielsweise denkbar, den Innendurchmesser der Gelenkpfanne derart auszubilden, dass der Gelenkkopf über eine Druckkraftbeaufschlagung zunächst unter Aufweitung der Wandungsbereiche in die Gelenkpfanne eingedrückt werden kann, sodass sich eine Klick- oder Schnappverbindung ergibt. In der Umkehr ist auch wieder eine Entnahme des Gelenkkopfes durch entsprechende Zugkraftbeaufschlagung möglich. Diese Verbindung stellt die einfachste Verbindung zwischen Gelenkkopf und Gelenkpfanne dar. Zur Einstellung der Betätigungskraft wird dann das Befestigungselement, wie oben ausführlich beschrieben, aufgesteckt.

Eine indirekte Veränderung wird dadurch bedingt, dass Gelenkkopf und Gelenkpfanne zunächst lose aneinander angeordnet sind und erst durch die Kraftbeaufschlagung des Befestigungselements die Gelenkpfanne gegen den oberen freien Endbereich des hülsenartigen Abschnitt geführt und/oder zumindest teilweise in den hülsenartigen Abschnitt hinein geführt wird, sodass sich die Gelenkpfanne aufgrund der Öffnungen im Wandungsbereich in ihrem Außen-und/oder Innendurchmesser verringert und der Gelenkkopf hierdurch gehalten wird. Dies ist zugleich ein vorteilhafter Effekt, da je nach Festziehen des Befestigungselementes der Außen-und/oder Innendurchmesser der Gelenkpfanne einstellbar ist. Folglich kann benutzerabhängig die Rotationsfreiheit des Gelenkkopfs innerhalb der Gelenkpfanne eingestellt werden.

Zugleich erfolgt mit der Einstellung der Rotationsfreiheit auch die Einstellung der Betätigungskraft, welche aufgewendet werden muss, um das Aufsatzelement innerhalb des Luftdüsengehäuse über die Kugelgelenkverbindung verschieden zu rotieren und auszurichten. Somit kann in einfacher Art und Weise sichergestellt werden, dass ein Leichtgang bzw. ein Klappern von Aufsatzelement und Luftdüsengehäuse stets nachjustierbar ist, indem das Befestigungselement nachgezogen wird.

Zugleich kann direkt auf die Vorlieben des Benutzers eingegangen werden, indem die Rotation und/oder die Verschiebung des Aufsatzelements und somit die Richtungseinstellung des Luftstromes beispielsweise sehr leicht oder aber auch sehr schwer erfolgen kann. Dies hängt jeweils von der Zugkraftbeaufschlagung der Gelenkpfanne innerhalb des hülsenartigen Abschnitts ab. Das Befestigungselement ist derart ausgebildet, dass die Betätigungskraft des Aufsatzelements einstellbar ausgebildet ist und dass diese Einstellung von unten, vorteilhafter Weise von der Rückseite des Luftdüsengehäuses her, vorgenommen wird.

Vorteilhaft ist zusätzlich innerhalb des Befestigungselements wenigstens eine Führungsnut vorgesehen. Diese Führungsnut ist von Vorteil, wenn das Befestigungselement mit eine Rotationskraft beaufschlagt wird. Dann wird während der Drehbewegung des Befestigungselements der wenigstens eine Vorsprung innerhalb dieser Führungsnut entlang geführt. Vorteilhaft beschreibt die wenigstens eine Führungsnut eine Spiralform. Durch Drehkraftbeaufschlagung des Befestigungselements wird wenigstens ein Vorsprung innerhalb der wenigstens einen Führungsnut derart geführt, dass Verlängerungsabschnitt in den hülsenartigen Abschnitt eingezogen wird. Auch hier ist das Luftdüsengehäuse wieder Begrenzungselement, welches den Einzug des Verlängerungsabschnitts erst ermöglicht. Das Befestigungselement selbst verbleibt während der Drehbewegung in unveränderter Position, da dessen Bewegung in Längserstreckung des Gelenkpfannenabschnitts von dem Luftdüsengehäuse unterbunden wird. Das Befestigungselement selbst kann aufgrund der Begrenzung durch das Luftdüsengehäuse nicht aktiv gegen den hülsenartigen Abschnitt geführt werden, so dass lediglich die Zugkraftbeaufschlagung des Verlängerungsabschnitts als offene Komponente verbleibt.

Zur unterschiedlichen Drehmomenteinstellung ist denkbar, unterschiedliche Rastpositionen, vorteilhaft ein bis fünf, des Befestigungselements vorzusehen.

In einer weiteren vorteilhaften Ausführungsform ist das Befestigungselement als Spannelement ausgebildet. In diesem weiteren Ausführungsbeispiel ist keine separate Mutter vorgesehen. Das Befestigungselement ist bereits am Gelenkpfannenabschnitt mit integriert. Das Spannelement ist im einfachsten Fall als Federelement ausgebildet.

In einer weiteren Ausführungsform ist es vorteilhaft, dass die Luftdüse weiterhin wenigstens ein Schließelement aufweist. Das Schließelement ist derart ausgebildet, dass es in seiner Position verfahrbar und/oder verdrehbar ausgebildet ist und zwar in Abhängigkeit der Betätigung des Aufsatzelements. Bei Bewegen des Aufsatzelements wird zugleich eine gekoppelte Bewegung des Schließelements erzeugt. Somit kann in einfach Weise der austretende Luftstrom aus der Luftdüse kontrolliert werden und beispielsweise vollständig unterbunden werden.

Bei einer weiteren vorteilhaften Ausführungsform ist das Schließelement über wenigstens ein Kupplungselement und/oder wenigstens ein Stellelement mit einem Einsatzelement und/oder dem hülsenartigen Abschnitt verbunden ausgebildet. Hierbei hat es sich weiterhin als vorteilhaft herausgestellt, dass das Schließelement als Doppelelement, beispielsweise als Schmetterlingselement vorgesehen ist. Das Schließelement ist vorteilhaft über wenigstens ein Stellelement, beispielsweise ein Zahnrad, mit wenigstens einem Kupplungselement verbunden. Das Kupplungselement umfasst wenigstens eine, vorteilhaft mehrere umfangsseitig angeordnete Öffnungen. Vorteilhaft umfasst das Einsatzelement in seiner Längsrichtung wenigstens ein Rastelement, welches derart ausgebildet ist, dass es in die wenigstens eine Öffnung des Kupplungselements eingreift. Die Fixierung von Aufsatzelement und Luftdüsengehäuse über die Gelenkverbindung erfolgt durch das entsprechende Befestigungselement. Der Gelenkpfannenabschnitt wird in diesem Ausführungsbeispiel hier allerdings in einem Einsatzelement angeordnet, welches in seinen Eigenschaften den Eigenschaften des hülsenartigen Abschnitts, wie ebenfalls oben beschrieben, entspricht. Zusätzlich weist das Einsatzelement allerdings wenigstens ein, vorteilhafter Weise mehrere Rastelemente auf, welche in die jeweils dafür vorgesehenen umfangsseitigen Öffnungen des Kupplungselementes eingeführt und damit verrastet werden. Hierdurch wird eine Fixierung von Kupplungs- mit Einsatzelement ausgebildet.

Ferner ist es vorteilhaft, dass Kupplungselement und/oder Einsatzelement im aneinander angeordneten Zustand gemeinsam um die Längsachse der Luftdüse zumindest teilweise rotierbar ausgebildet sind. Wird nun das Aufsatzelement betätigt, beispielsweise verdreht, so wird diese Drehbewegung auf das Aufsatzelement und Kupplungselement weitergeleitet. Beide Elemente drehen sich ebenfalls. Hierdurch wiederum wird das Stellelement ebenfalls in Drehbewegung versetzt, welches über die Zahnradverbindung das Schließelement in seiner Position verschwenkt, so dass sich das Schließelement schließt und der Luftstrom unterbrochen wird.

Zur Unterstützung der Weiterleitung der Drehbewegung innerhalb der einzelnen Bauteile der Luftdüse, hat es sich in einer weiteren vorteilhaften Ausführungsform als vorteilhaft gezeigt, dass der Gelenkkopf wenigstens einen Vorsprung umfasst. Vorteilhaft sind wenigstens zwei stiftartige Vorsprünge an dem Gelenkkopf vorgesehen, welche weiterhin vorteilhaft einander gegenüberliegend, sich radial nach außen erstreckend ausgebildet sind. Beide Vorsprünge sind in zwei, hierzu komplementär ausgebildete Öffnungen der Gelenkpfanne angeordnet. Diese beiden Öffnungen stehen dann nur noch eingeschränkt zur Veränderung des Außen- und/oder Innendurchmessers der Gelenkpfanne zur Verfügung. Die Vorsprünge sind für die Führung der Kugel und/oder des Gelenkkopfes von Vorteil. Insbesondere für die Steuerung des Schließelements über den oben ausgeführten Kopplungsmechanismus erweisen sich die stiftartigen Vorsprünge als vorteilhaft, da sie eine Begrenzung der Rotationsbewegung des Aufsatzelements ausbilden und somit zugleich die Steuerung des wenigstens einen Schließelements deutlich erleichtern.

Ferner ist denkbar innerhalb des Kupplungselements wenigstens ein Bremselement, beispielsweise einen Kunststoffring, welcher zumindest teilweise oberhalb des Kupplungselements und/oder zumindest teilweise innerhalb des Kupplungselements angeordnet ist, vorzusehen. Hierdurch kann zusätzlich die einwirkende Kraft zum Verstellen des Schließelements kontrolliert werden.

Weiterhin ist vorteilhaft, wenn zwischen Befestigungsmittel und Luftdüsengehäuse wenigstens ein Distanzelement, beispielsweise eine Unterlegscheibe, vorgesehen ist. Diese Unterlegscheibe ist vorteilhaft weiterhin als Sicherungsscheibe ausgebildet, um ein Lösen des Befestigungselementes zu verhindern.

Darüber hinaus hat es sich vorteilhaft gezeigt, die erfindungsgemäße Luftdüse als Kugelluftdüse in Kraftfahrzeuginnenräumen, insbesondere für Heizungs-, Klima- und/oder Belüftungsanlagen zu verwenden.

Die Erfindung wird nachfolgend anhand der in der Zeichnung dargestellten Ausführungsbeispiele ergänzend erläutert. Hierin zeigt:
- Fig. 1 - Fig. 4: eine erste nicht erfindungsgemäße Ausführungsform eines Gelenkpfannenabschnitts mit teilweise eingeführtem Befestigungselement und Sicherungselement;
- Fig. 5 - 23: stellen weitere Beispiele dieser Ausführungsform, die das Verständnis der Erfindung erleichtern dar;

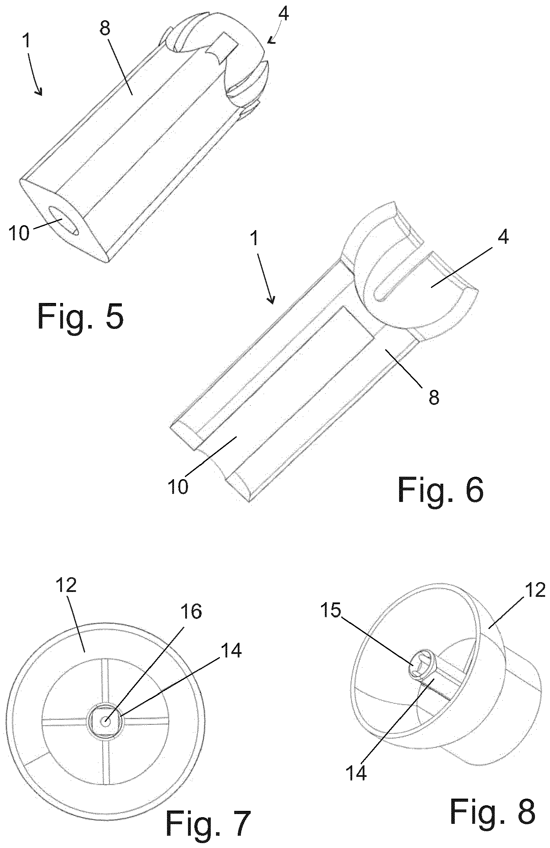

- Fig. 5: eine perspektive Ansicht und Schnittdarstellung eines Gelenkpfannenabschnitts ohne Befestigungselement mit einer Ausnehmung im Verlängerungsabschnitt;
- Fig. 6: eine weitere perspektive Ansicht und Schnittdarstellung eines Gelenkpfannenabschnitts ohne Befestigungselement mit einer Ausnehmung im Verlängerungsabschnitt;
- Fig. 7: eine Draufsicht auf ein beispielhaftes Luftdüsengehäuse;
- Fig. 8: eine perspektivische Darstellung eines Luftdüsengehäuses mit einem beispielhaften hülsenartigen Abschnitt, welcher zentriert angeordnet ist;

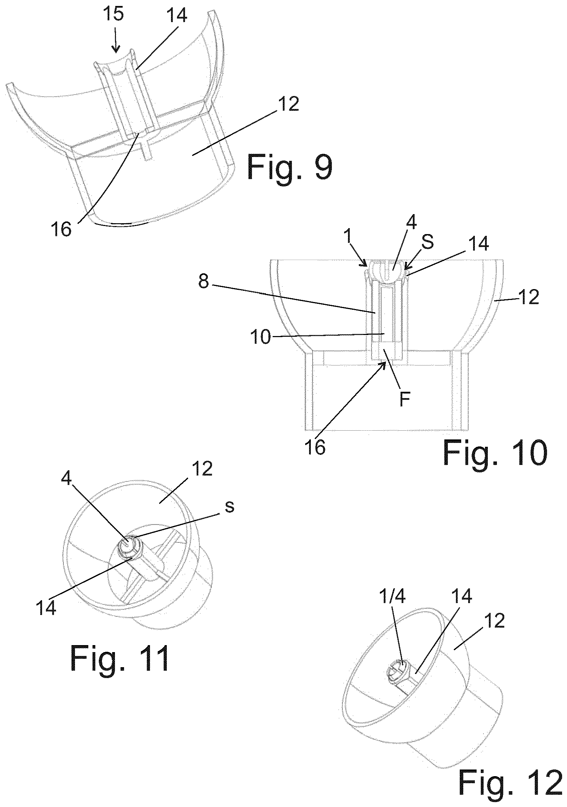

- Fig. 9: eine Schnittdarstellung des in Fig. 8 gezeigten Luftdüsengehäuses dar, wobei das obere freie Ende des hülsenartigen Abschnitts zumindest teilweise gekrümmt, vorteilhaft konvex und/oder konkav gekrümmt, zur Aufnahme der Gelenkpfanne ausgebildet ist. Vorteilhaft umfasst der hülsenartige Abschnitt an seinem gegenüberliegenden Gehäuseende wenigstens eine Öffnung, durch welche ein Befestigungselement zum Teil hindurchführbar ist;
- Fig. 10: eine vergrößerte Schnittdarstellung eines Luftdüsengehäuses mit darin angeordnetem Gelenkpfannenabschnitt;
- Fig. 11: eine weitere perspektivische Ansicht eines Luftdüsengehäuses mit darin angeordnetem Gelenkpfannenabschnitt;
- Fig. 12: eine weitere perspektivische Ansicht eines Luftdüsengehäuses mit darin angeordnetem Gelenkpfannenabschnitt;

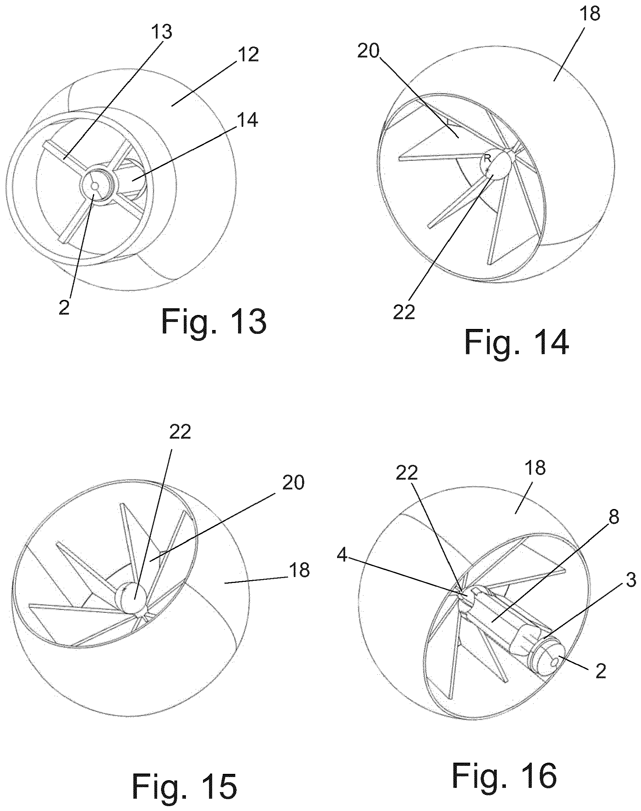

- Fig. 13: die Unterseite eines Luftdüsengehäuses mit darin angeordnet Gelenkpfannenabschnitt;
- Fig. 14 - Fig. 15: ein beispielhaftes Aufsatzelement mit mehreren Luftleitelementen, welche zentrisch zusammenlaufen. An der dem Luftdüsengehäuse zugewandten Innenseite umfasst das Aufsatzelement wenigstens ein zweite Gelenkelement, vorteilhaft einen Gelenkkopf, welcher vorteilhaft zum Teil als Kugel ausgebildet ist und fest mit dem Aufsatzelement verbunden ist. Der Gelenkkopf ist derart ausgebildet, dass er von der Gelenkpfanne zum Teil aufgenommen werden kann, wie in Fig. 16 gezeigt;

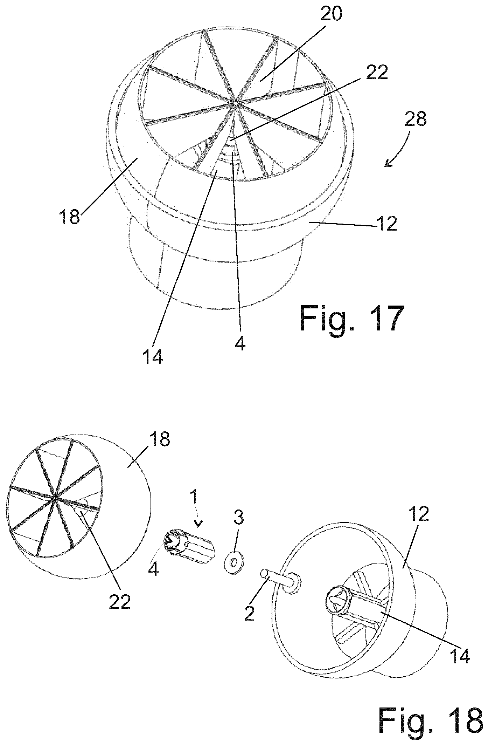

- Fig. 17: eine vorteilhafte Luftdüse;
- Fig. 18: eine schematische Explosionszeichnung der vorteilhaften Luftdüsenbestandteile aus Fig. 17;

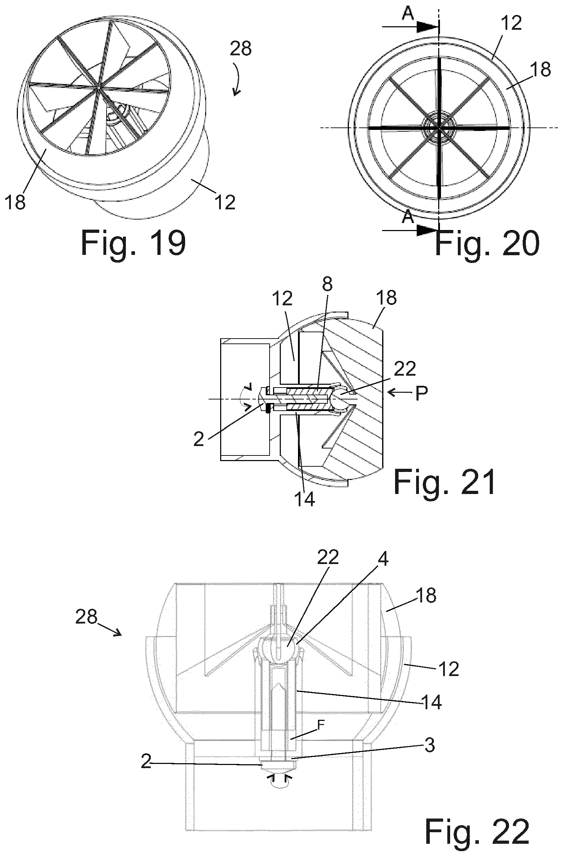

- Fig. 19: eine weitere Ansicht einer Luftdüse;
- Fig. 21 - Fig. 23: eine Schnittdarstellung entlang der Linie A-A der Fig. 20 einer Luftdüse;

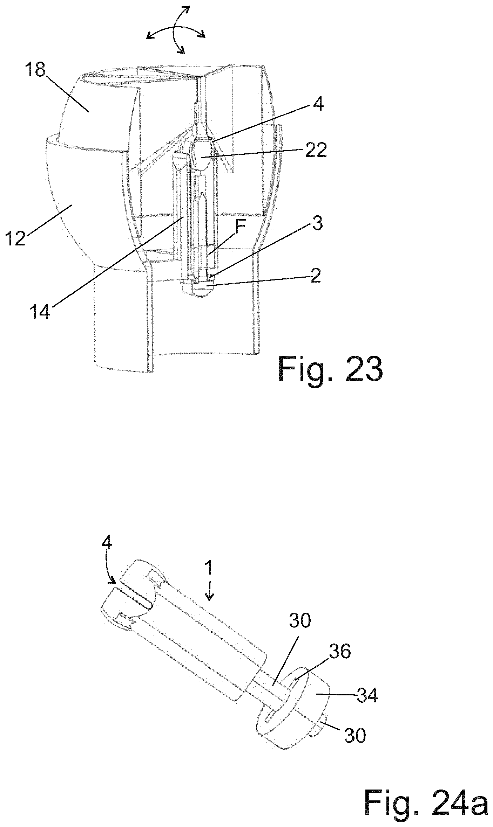

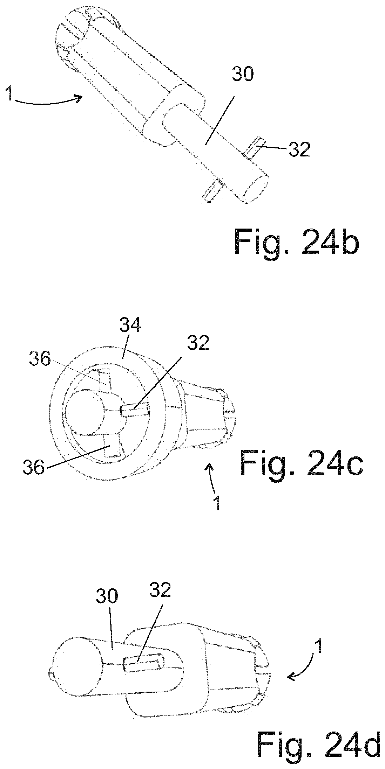

- Fig. 24a - Fig. 24d: eine Ausführungsform eines Gelenkpfannenabschnitts gemäß der Erfindung nach Anspruch 1;

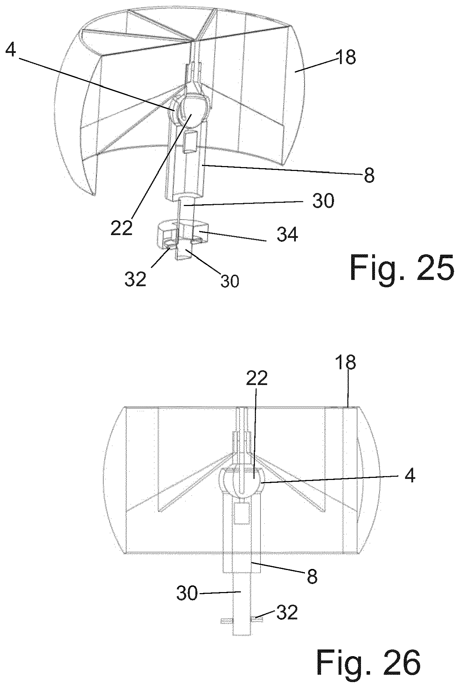

- Fig. 25: den erfindungsgemäßen Gelenkpfannenabschnitt im angeordneten Zustand an dem Aufsatzelement mit ausgebildeter Gelenkverbindung;
- Fig. 26: eine weitere Ansicht des erfindungsgemäßen Gelenkpfannenabschnitts im angeordneten Zustand an dem Aufsatzelement mit ausgebildeter Gelenkverbindung;

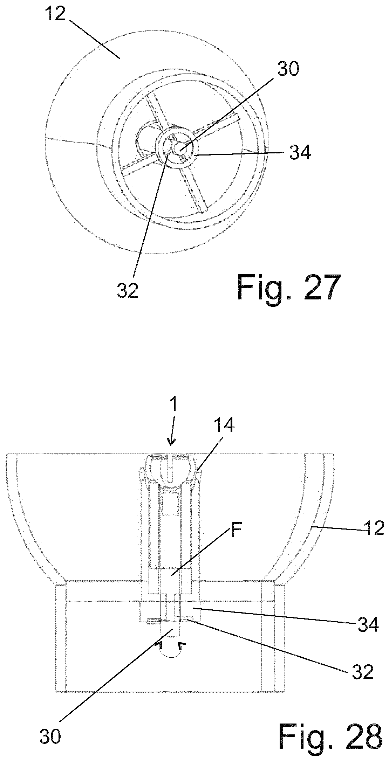

- Fig. 27: die Unterseite eines Luftdüsengehäuses mit dem erfindungsgemäßen Gelenkpfannenabschnitt;
- Fig. 28: eine weitere Schnittansicht eines Luftdüsengehäuses mit dem erfindungsgemäßen Gelenkpfannenabschnitt;

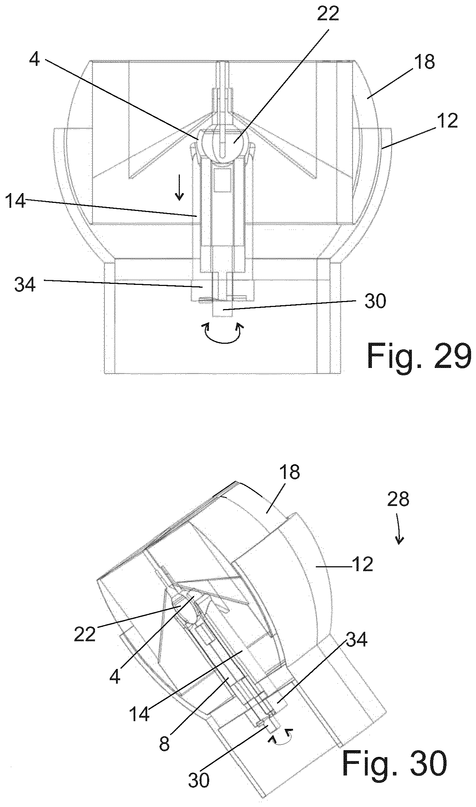

- Fig. 29: eine weitere Schnittansicht eines Luftdüsengehäuses mit dem erfindungsgemäßen Gelenkpfannenabschnitt;
- Fig. 30: eine weitere perspektivische Schnittansicht eines Luftdüsengehäuses mit einem erfindungsgemäßen Gelenkpfannenabschnitt;

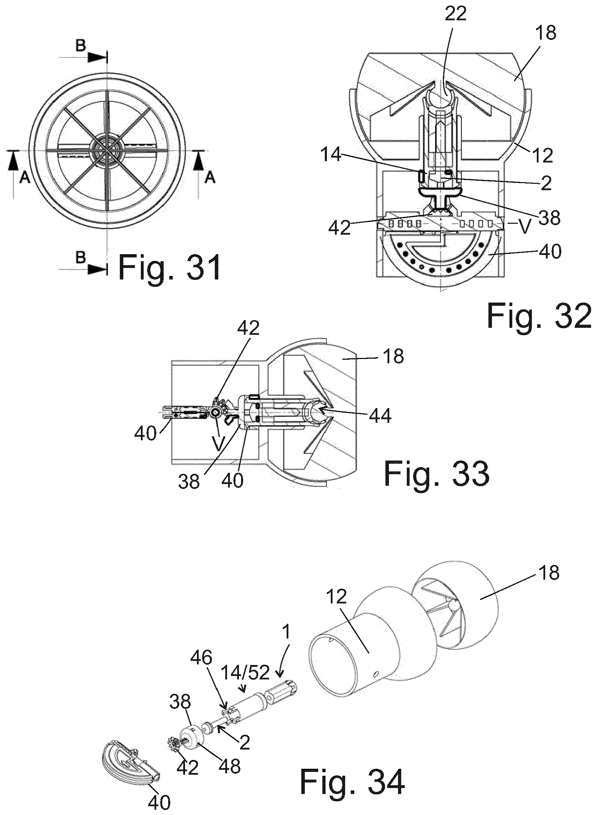

- Fig. 31: eine Draufsicht einer weiteren beispielhaften Luftdüse, die das Verständnis der Erfindung erleichtert; Fig. 32 - 43 stellen weitere Ansichten dieser weiteren beispielhaften Luftdüse dar;
- Fig. 32: einen Schnitt entlang A-A der Fig. 31.
- Fig. 33: einen Querschnitt entlang B-B der Fig. 31.
- Fig. 34: eine Explosionszeichnung einer Luftdüse mit Kupplungselement 38 und Schließelement 40;

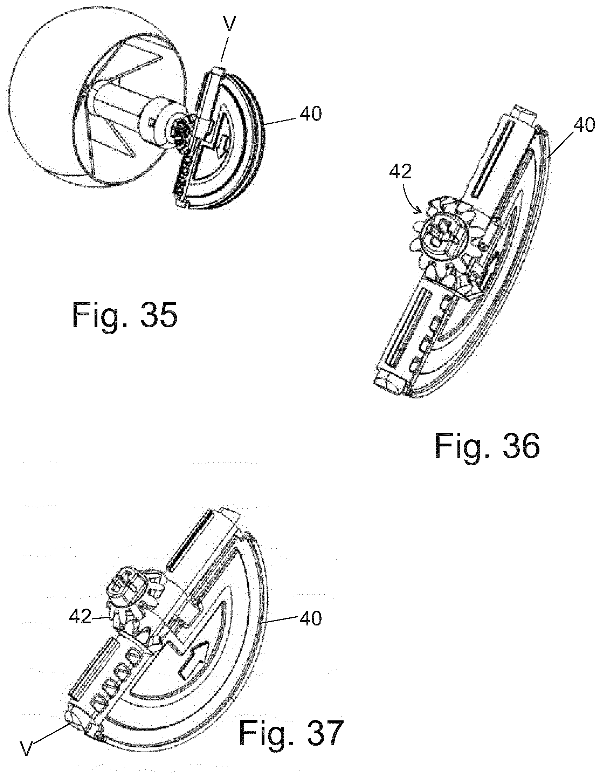

- Fig. 35: eine perspektivische Ansicht eines Teils einer weiteren Luftdüse;
- Fig. 36 und Fig. 37: perspektivische, schematische Darstellungen des Kopplungsmechanismus;

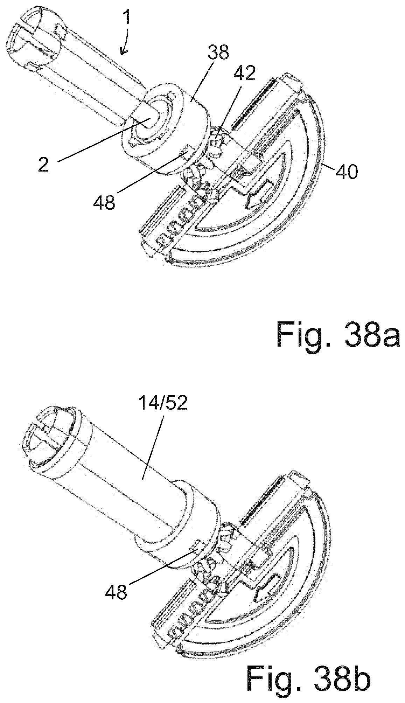

- Fig. 38a: eine weitere Ansicht eines Teils einer weiteren Luftdüse;
- Fig. 38b: eine weitere Ansicht eines Teils einer weiteren Luftdüse;

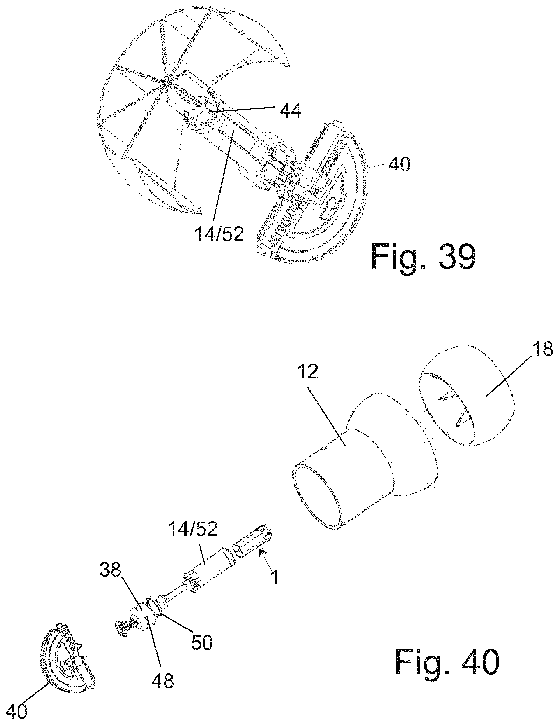

- Fig. 39: eine weitere Ansicht eines Teils einer weiteren Luftdüse;
- Fig. 40: eine Explosionszeichnung einer weiteren Luftdüse;

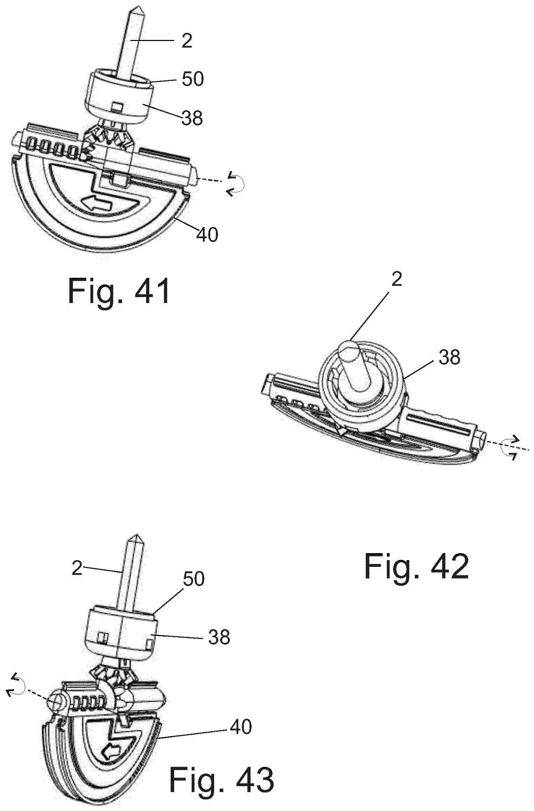

- Fig. 41: eine weitere perspektivische Darstellung eines Teils der weiteren Luftdüse aus Fig. 34;
- Fig. 42: eine weitere perspektivische Darstellung eines Teils der weiteren Luftdüse aus Fig. 34; und
- Fig. 43: eine weitere perspektivische Darstellung eines Teils der weiteren Luftdüse aus Fig. 34.

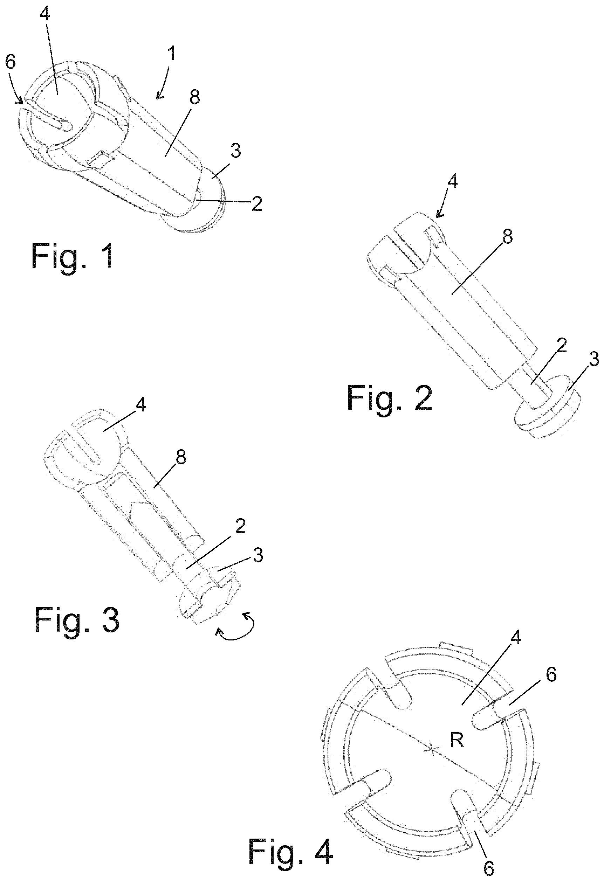

In Fig. 1 ist erste Ausführungsform eines Gelenkpfannenabschnitts 1 mit teilweise eingeführtem Befestigungselement 2 und Sicherungselement 3 gezeigt. Das Sicherungselement 3 entspricht einem Distanzelement. Der Gelenkpfannenabschnitt 1 weist an seinem oberen freien Ende die Gelenkpfanne 4 auf, an welcher sich der Verlängerungsabschnitt 8 längsseitig anschließt. Die Gelenkpfanne 4 weist exemplarisch vier Öffnungen 6 auf, welche sich ebenfalls in Längsrichtung des Gelenkpfannenabschnitts 1 erstrecken. Die Gelenkpfanne ist zumindest teilweise gekrümmt ausgebildet, vorteilhaft pfannenartig und/oder zumindest teilweise kugelschalenartig nach oben geöffnet und/oder konvex gekrümmt, so dass ein zumindest teilweise kugelförmig ausgebildeter Gelenkkopf (nicht gezeigt) in die Gelenkpfanne 4 einführbar und fixierbar ist.

Ferner ist am freien Ende des Verlängerungsabschnitts 8, welches der Gelenkpfanne gegenüberliegend angeordnet ist, wenigstens ein Befestigungselement 2 vorgesehen. Im einfachsten Fall ist dies als Schraube ausgebildet.

Des Weiteren ist in Fig. 2 eine weitere Ansicht eines Gelenkpfannenabschnitts 1 der Fig. 1 gezeigt, bei welchem insbesondere das Befestigungselement 2 und das Sicherungselement 3 sichtbar sind. Das Befestigungselement 2 wird von unten, also an dem der Gelenkpfanne 4 gegenüberliegenden freien Ende des Verlängerungsabschnitts 8 durch die Öffnung in diesen eingeführt. Dies ist vorteilhaft in Fig. 3 gezeigt. Das Sicherungselement 3 ist vorteilhaft als Distanzring aus elastischem Material, beispielsweise Gummi ausgebildet. Die beiden Pfeilrichtungen geben an, dass das Befestigungselement 2 in den Verlängerungsabschnitt 8 einrotiert wird, so dass sich das Befestigungselement 2 in die Ausnehmung des Verlängerungsabschnitts 8 nach und nach einbringt. Zur verbesserten Sicherung und Halterung ist das Sicherungselement 3 vorgesehen. Diese Darstellung ist exemplarisch zu verstehen. Der gleiche Mechanismus erfolgt bei der Fixierung im hülsenartigen Abschnitt (nicht gezeigt).

In Fig. 4 ist eine Draufsicht auf die Gelenkpfanne 4 gezeigt, bei welcher die Rotationsachse R der Längsachse des Gelenkpfannenabschnitts 1 entspricht. Die Öffnungen 6 der Gelenkpfanne 4 sind hier gleichmäßig zueinander beabstandet angeordnet. Selbstverständlich ist die Anzahl 4 der Öffnungen 6 nicht begrenzend zu verstehen, so dass auch durchaus eine größere Anzahl an Öffnungen 6 vorgesehen sein kann, beispielsweise 5 bis 12.

In Fig. 5 ist eine perspektivische Ansicht des Gelenkpfannenabschnitts 1 ohne Befestigungselement mit der Öffnung im Verlängerungsabschnitt 8 gezeigt. Die Öffnung ist an dem der Gelenkpfanne 4 gegenüberliegenden Ende des Verlängerungsabschnittes 8 eingebracht und erstreckt sich als Ausnehmung 10 zumindest teilweise innerhalb des Verlängerungsabschnitts 8. In diese Ausnehmung und/oder Öffnung 10 ist das Befestigungselement, wie bei den vorhergehenden Figuren gezeigt, in den Verlängerungsabschnitt 8 einführbar. Vorteilhaft weist die Ausnehmung wenigstens ein Innengewinde und/oder einen anderen Fixierungsmechanismus auf, mittels welchem das Befestigungselement (nicht gezeigt) in der Ausnehmung lösbar fixierbar ist, beispielsweise verklickbar, verschraubbar, verrastbar oder dergleichen.

In Fig. 6 ist die entsprechende Schnittdarstellung des Gelenkpfannenabschnitts 1 der Fig. 5 gezeigt, wo insbesondere die Ausnehmung 10 dargestellt ist. Je nach Ausführung ist denkbar, die Ausnehmung 10 in unterschiedlicher Längsrichtungserstreckung vorzusehen, diese also kürzer oder länger als abgebildet bereitzustellen.

In Fig. 7 ist eine Draufsicht auf ein beispielhaftes Luftdüsengehäuse 12 gezeigt. In dieser Draufsicht ist mittig angeordnet der hülsenartige Abschnitt 14 gezeigt, an dessen Bodenfläche eine weitere Öffnung 16 ausgebildet ist. Diese weitere Öffnung 16 dient dem Durchführen des Befestigungselementes (nicht gezeigt) und der Fixierung des Gelenkpfannenabschnitts (nicht gezeigt) an dem hülsenartigen Abschnitt 14.

Vorteilhaft ist das Luftdüsengehäuse 12 zumindest teilweise kugelförmig, vorteilhafter halbkugelförmig, ausgebildet. Dies wird insbesondere in Fig. 8 und 9 deutlich, welche ebenfalls ein Luftdüsengehäuse 12 im Querschnitt zeigt. Das Luftdüsengehäuse 12 weist einen zylindrischen Abschnitt und einen sich nach oben gekrümmt erweiternden Abschnitt 13 auf. In diesem sich nach oben gekrümmt erweiterten Abschnitt 13 ist der hülsenartige Abschnitt 14 angeordnet. An dessen Unterseite ist die Öffnung 16 zum Durchführen des Befestigungselements (nicht gezeigt) ausgebildet. Damit auch der Verlängerungsabschnitt 8 durch das Einrotieren des Befestigungselements 2 in den hülsenartigen Abschnitt erfolgt, weist das Luftdüsengehäuse 12 im Bereich der Öffnung 16 eine ausreichende Wandung auf, so dass das Befestigungselement selbst nicht weiter als bis zu dieser Wandung eindrehbar ist. Dies hat zur Folge, dass mit weiterem Eindrehen des Befestigungselements 2, dieses den Verlängerungsabschnitt 8 in Richtung der Wandung zieht. Der Verlängerungsabschnitt 8 wird folglich in den hülsenartigen Abschnitt gegen die Wandung eingezogen.

In Fig. 8 ist eine weitere perspektivische Darstellung des Luftdüsengehäuses 12 gezeigt, wobei das hier beschriebene Luftdüsengehäuse 12 vorteilhaft für Kugelluftdüsen verwendet wird. Der hülsenartige Abschnitt 14 ist mittig innerhalb des Luftdüsengehäuses 12 angeordnet und weist eine ebenfalls nach oben gerichtete Öffnung 15 auf. In diese Öffnung 15 ist der Gelenkpfannenabschnitt (nicht gezeigt) zumindest teilweise einführbar.

Vorteilhaft ist die Öffnung 15 des hülsenartigen Abschnitts 14 konisch ausgebildet und weist einen in Richtung Öffnung 16 sich verjüngenden Querschnitt auf. Insbesondere diese konische Ausbildung ist zur Einstellung des Aufsatzelementdrehmoments von Vorteil.

Weiterhin ist denkbar, den hülsenartigen Abschnitt 14 über Querstreben 17 mit dem Luftdüsengehäuse 12 fest zu verbinden. Dies dient zur erhöhten Stabilität der Luftdüse selbst.

In Fig. 10 ist eine vergrößerte Schnittdarstellung des Luftdüsengehäuses 12 mit darin angeordnetem Gelenkpfannenabschnitt 1 gezeigt. Die Öffnung 16 des Luftdüsengehäuses 12 ist in diesem Fall weiterhin offenliegend, also frei vorgesehen. In dem hülsenartigen Abschnitt 14 ist der Gelenkpfannenabschnitt 1 zumindest teilweise eingeführt. Der Verlängerungsabschnitt 8 ist nahezu vollständig im hülsenartigen Abschnitt 14 angeordnet. Die Ausnehmung 10 des Verlängerungsabschnitts 8 ist deckungsgleich mit der Öffnung 16 des Luftdüsengehäuses 12, welche auch zugleich Öffnung des hülsenartigen Abschnitts 14 ist, ausgebildet, so dass bei Bedarf das Befestigungselement (nicht gezeigt) sowohl durch die Öffnung 16 als auch in die Ausnehmung 10 einführbar und/oder arretierbar, beispielsweise verschraubbar ist.

Zwischen dem unteren Ende des Verlängerungsabschnitts 8 und dem unteren Ende des hülsenartigen Abschnitts 14 ist ein Freivolumen F vorgesehen, welcher sich bei Betätigung des Befestigungselements (nicht gezeigt) verkleinert und der Gelenkpfannenabschnitt 1 insgesamt in Richtung der Öffnung 16 geführt wird. Im unfixierten, aber eingeführten Zustand des Gelenkpfannenabschnitts 1, wie hier in Fig. 10 gezeigt, bildet das obere freie Ende der Gelenkpfanne 4 eine gemeinsame Ebene mit dem freien oberen Ende des Luftdüsengehäuses 12 aus. Im fixierten Zustand, unter Betätigung des Befestigungsmittels (nicht gezeigt) ist die Gelenkpfanne 4 unterhalb dieser Ebene angeordnet.

Zudem ist ersichtlich, dass sich zwischen dem oberen freien Endbereich des hülsenartigen Abschnitts 14, welcher benachbart zu der Gelenkpfanne 4 angeordnet ist, ein Spalt S ergibt. Dieser Spalt S ist vorteilhaft eine konische und/oder gekrümmt ausgebildete Ausführung des oberen freien Endes des hülsenartigen Abschnitts 14 bedingt. Durch diese vorteilhafte konische und/oder konvex gekrümmte Ausbildung ist es möglich, den Gelenkpfannenabschnitt 1 in den hülsenartigen Abschnitt 14 unter Zugkraft- und/oder Druckkraftbeaufschlagung einzuführen.

Hierdurch wird sowohl der Außen- als auch der Innendurchmesser der Gelenkpfanne 4 verändert, so dass die Haltekraft für den nicht gezeigten Gelenkkopf veränderbar wird.

In Fig. 11 ist die entsprechend dreidimensionale Darstellung der Fig. 10 nochmals gezeigt. Gleiches gilt für Fig. 12. Auch hier ist der Spalt S zwischen Gelenkpfanne 4 und hülsenartigem Abschnitt 14 deutlich zu erkennen.

In Fig. 13 ist die Unterseite des Luftdüsengehäuses 12 mit darin angeordnetem Gelenkpfannenabschnitt 1 gezeigt. Insbesondere ist hier das bereits eingebrachte Befestigungselement 2 dargestellt.

In Fig. 14 ist ein weiteres Bauteil der Luftdüse dargestellt, nämlich das Aufsatzelement 18. Das Aufsatzelement 18 ist ringförmig gekrümmt, vorteilhaft konvex gekrümmt, ausgebildet und weist eine Vielzahl an Luftleitelementen 20 auf, welche als strahlenförmige Lamellen ausgebildet sind. Zentrisch, vorteilhaft entlang der Rotationsachse R, ist der Gelenkkopf 22 fest an dem Aufsatzelement 18 angeordnet.

In diesem Ausführungsbeispiel ist der Gelenkkopf 22 nahezu kugelförmig ausgebildet und weist nur an einem Bereich die Verbindung mit dem Aufsatzelement 18 auf. Fig. 15 zeigt das Aufsatzelement von Fig. 14 in einer weiteren perspektivischen Darstellung.

In Fig. 16 ist weiterhin ein Aufsatzelement 18 mit daran angeordnetem Gelenkpfannenabschnitt 1 gezeigt. In diesem Fall ist der Gelenkkopf 22 bereits innerhalb der Gelenkpfanne 4 angeordnet, beispielsweise eingeschnappt oder anderweitig fixiert.

Die in Fig. 17 dargestellte Ansicht zeigt eine Luftdüse 28, bei welcher an dem Luftdüsengehäuse 12 bereits das Aufsatzelement 18 mit daran angeordnetem Gelenkpfannenabschnitt 1 in dem hülsenartigen Abschnitt 14 des Luftdüsengehäuses 12 eingesetzt ist und von unten mit dem Befestigungselement 2 fixiert wird. Vorteilhaft ist das Aufsatzelement 18 zumindest teilweise innerhalb des Luftdüsengehäuses 12 angeordnet, wobei ein Bewegungsspielraum des Aufsatzelements 18 sichergestellt ist.

In Fig. 18 ist eine entsprechende Explosionszeichnung einer Ausführungsform einer Luftdüse 28 dargestellt. Das Luftdüsengehäuse 12 mit dem hülsenartigen Abschnitt 14 dient zur Aufnahme des Gelenkpfannenabschnitts 1, dessen Gelenkpfanne 4 wiederum zur Aufnahme des Gelenkkopfes 22 des Aufsatzelements 18 ausgebildet ist. Eine Fixierung erfolgt lediglich durch das Befestigungselement 2, welches zusätzlich noch ein Sicherungselement 3, beispielsweise eine Dichtungsscheibe, aufweisen kann. Das Befestigungselement 2 wird von hinten, also von dem zylindrischen Teil des Luftdüsengehäuses 12 her, durch den hülsenartigen Abschnitt 14 in die Ausnehmung 10 des Verlängerungsabschnittes 8 eingeführt und festgeschraubt. Durch die Wandung des Luftdüsengehäuses 12 wird hierbei der Gelenkpfannenabschnitt 1 in den hülsenartigen Abschnitt 14 eingezogen, so dass sich zugleich der Außen- und/oder Innendurchmesser der Gelenkpfanne 4 verringert und der Bewegungsspielraum des darin angeordneten Gelenkkopfes 22 reduziert wird. Dies bedingt eine erhöhte Betätigungskraft, wenn der aus dem Aufsatzelement austretende Luftstrom beispielsweise auf die Fensterscheibe gerichtet werden soll.

In Fig. 19 ist eine dreidimensionale Darstellung der in Fig. 17 gezeigten Luftdüse 28 zur Verdeutlichung abgebildet. Durch die gekrümmte Ausbildung des Aufsatzelementes 22 und des Luftdüsengehäuses 12 ist es möglich, das Aufsatzelement 18 um die Gelenkverbindung zumindest teilweise innerhalb des Luftdüsengehäuses 12 zu rotieren und zu verschieben.

In Fig. 20 ist eine Draufsicht einer Luftdüse 28 gezeigt, wobei die Schnittfläche A-A in Fig. 21 schematisch erläutert wird. Hier wird insbesondere dargestellt, dass durch Rotation des Befestigungselementes 2 von unten, das heißt vom zylindrischen Abschnitt des Luftdüsengehäuses 12 her, eingeführte Befestigungselement 2 rotiert, beispielsweise eingeschraubt wird, und so der Verlängerungsabschnitt und zugleich der gesamte Gelenkpfannenabschnitt 1 in den hülsenartigen Abschnitt 14 eingezogen wird. Es entsteht somit die Druckkraftbeaufschlagung P auf den Gelenkkopf 22, da sich die Gelenkpfanne 4 in ihrem Innendurchmesser verringert und folglich den Gelenkkopf 22 fester umschließt.

In Fig. 22 ist dies in einer weiteren Schnittdarstellung erneut gezeigt, wobei hier das Befestigungselement 2 bereits in die Ausnehmung 10 des Verlängerungsabschnitts 8 eingeführt ist, allerdings noch ein deutliches Freivolumen F zwischen dem Verlängerungsabschnitt 8 und dem hülsenartigen Abschnitt 14 besteht. Folglich kann der Gelenkpfannenabschnitt 1 noch weiter in den hülsenartigen Abschnitt 14 eingeführt werden. Wird nun das Befestigungselement 2 weiter betätigt, also in die Ausnehmung 10 des Verlängerungsabschnitts 8 eingeschraubt, so verringert sich das Freivolumen F und der Gelenkpfannenabschnitt 1 wird in dem hülsenartigen Abschnitt 14 versenkt.

In Fig. 23 ist weiterhin eine Schnittdarstellung einer Luftdüse 28 gezeigt, bei welcher ersichtlich ist, dass die Gelenkverbindung der Luftdüse 28, ausgebildet aus Gelenkkopf 22 und Gelenkpfanne 4 ein Kugelgelenk darstellt, welches die Rotation des Aufsatzelementes in jegliche Richtung ermöglicht.

In Abhängigkeit des Befestigungselementes 2 wird die Betätigungskraft des Aufsatzelementes 18 eingestellt. Je weiter das Befestigungselement 2 in die Ausnehmung 10 des Verlängerungsabschnittes 8 eingeführt ist, desto weiter ist der Verlängerungsabschnitt 8 gegen den hülsenartigen Abschnitt 14 geführt und umso geringer wird der Innendurchmesser der Gelenkpfanne 4.

In Fig. 24a bis d ist eine erfindungsgemäße Ausführungsform eines Gelenkpfannenabschnitts 1 gezeigt, welcher auf ein separat einführbares Befestigungselement verzichtet. Hierzu ist an der der Gelenkpfanne 4 gegenüberliegenden freien Seite eine Materialverjüngung 30 fest angeordnet. Diese Materialverjüngung 30 weist zudem wenigstens einen Vorsprung 32, vorteilhaft zwei einander gegenüberliegende Vorsprünge 32, auf.

Um nun die gleiche Funktion wie bei den Befestigungselement zuvor beschrieben, zu erzielen, wird hier ein weiteres zusätzliches Befestigungselement 34 vorgesehen, welches über wenigstens einen der beiden, vorteilhaft über beide , Vorsprünge 32 aufgeschoben wird, um dann entsprechend zu verrasten (gezeigt in Fig. 24c). Das Befestigungselement 34 kann als Ring und/oder Scheibe ausgebildet sein.

In diesem Ausführungsbeispiel wird die Verringerung des Innendurchmessers der Gelenkpfanne 4 dadurch bewirkt, dass das Befestigungselement 34 von unten im zylindrischen Abschnitt des Luftdüsengehäuses (nicht gezeigt) auf die Materialverjüngung 30 und/oder wenigstens einen Vorsprung 32 aufgesteckt (gezeigt in Fig. 27) und, wie in Fig. 28 - 30 gezeigt, vorteilhaft um 90° rotiert wird. Durch diese Rotation wird das Befestigungselement 34 gegen die begrenzende Wandung des Luftdüsengehäuses 12 geführt und zieht somit den Gelenkpfannenabschnitt 1 nach unten in Richtung des zylindrischen Abschnitts des Luftdüsengehäuses 12. Das zuvor beschriebene Freivolumen F verringert sich auch hier.

Zudem wird auch hier eine Verringerung des Innendurchmessers der Gelenkpfanne 4 bedingt, wie bereits für das erste Ausführungsbeispiel beschrieben. Eine entsprechende Anordnung mit dem Aufsatzelement 18 und der weiteren Alternative des Gelenkpfannenabschnittes 1 ist in Fig. 25 und 26 gezeigt. Darüber hinaus ist auch denkbar, dass das Befestigungselement 34 wenigstens eine innenliegende Führungsnut aufweist, in welcher wenigstens ein Vorsprung 32 geführt werden kann. Hierdurch werden zusätzliche Rastpositionen ermöglicht, um da Drehmoment des Aufsatzelements (nicht gezeigt) entsprechend einstellen zu können.

In Fig. 32 ff. ist eine weitere Ausführungsform einer Luftdüse 28 dargestellt, bei welcher neben dem Befestigungselement 2 zusätzlich ein Schließelement 40 vorgesehen ist. Dieses Schließelement 40 ist mit einem Stellelement 42 verbunden, wobei das Stellelement 42 beispielsweise als konisches Zahnrad ausgebildet sein kann. Das Stellelement 42 ist an einem Kupplungselement 38 angeordnet und tritt in Wechselwirkung mit ebenfalls zahnrädrig ausgebildeten Bereichen des Schließelementes 40.

Das Kupplungselement 38 weist wenigstens eine umfangsseitige Öffnung 48 auf, in welche jeweils ein Rastelement 46 des Einsatzelements 52 eingreift und gesichert wird (siehe Fig. 34).

Zudem dient das Kupplungselement 38 zusätzlich als Verbindung des Stellelements 42 mit dem Schließelement 40. Insbesondere gilt zu berücksichtigen, dass hier ein weiteres Einsatzelement 52 vorgesehen ist, welches den ursprünglichen hülsenartigen Abschnitt 14 ersetzt. Das Einsatzelement 52 weist vorteilhaft mehrere nasenartige Rastelemente 46 auf, welche in entsprechend vorgesehene Öffnungen 48 des Kupplungselementes 38 einführbar und arretierbar sind. Folglich kann das Einsatzelement 52 in das Kupplungselement 38 eingesteckt werden. Zugleich ist innerhalb des Einsatzelementes 52 das Befestigungselement 2 angeordnet, welches wiederum in den Gelenkpfannenabschnitt 1, wie zuvor auch beschrieben, einführbar ist. Durch Betätigung des Aufsatzelementes 18 wird eine Kopplung bedingt, so dass über dem Kupplungselement 38 und dem Stellelement 42 das Schließelement 40 in seiner Position verändert werden kann. Dies bedeutet, dass durch Betätigung des Aufsatzelementes 18 das Schließelement 40 in seiner Position geöffnet oder verschlossen ausgebildet sein kann. Zur genaueren Ausbildung ist auf die Fig. 32 bis 34 .

In Fig. 31 ist eine Draufsicht der weiteren Ausführungsform einer Luftdüse 28 gezeigt, wobei in Fig. 32 der Querschnitt entlang A-A und in Fig. 33 der Querschnitt entlang B-B gezeigt ist.

In Fig. 35, 36, 37, 41 ist das Schließelement 40 dargestellt. Dieses ist entlang einer Verschwenkachse V in seiner Ausrichtung verschwenkbar ausgebildet. In der hier gezeigten Verschwenkposition ist das Schließelement 40 geöffnet, so dass ein Luftstrom durch den zylindrischen Abschnitt des Luftdüsengehäuses hindurch und aus dem Aufsatzelement 18 austreten kann (nicht gezeigt).

Die gleiche geöffnete Verschwenkposition ist in Fig. 39 gezeigt. Der Gelenkkopf 22 weist hierbei zwei Führungsvorsprünge 44 auf. Wird nun das Aufsatzelement 18 betätigt und rotiert, so wird diese Kraftbeaufschlagung über die beiden bewegungsbegrenzenden Führungsvorsprünge 44 auf das Kupplungselement 38 und weiter an das Schließelement 40 übertragen. Dieser verschwenkt von dem geöffneten Zustand, wie in Fig. 39 abgebildet, in einen verschlossenen Zustand, bei welchem das Schließelement 40 vorteilhaft um 90° verschwenkt wird und den zylindrischen Abschnitt des Luftdüsengehäuses (nicht gezeigt) verschließt. Ein Luftstromaustritt aus dem Aufsatzelement 18 wird somit unterbunden.

In Fig. 41 ist die in Fig. 35 gezeigte Ausführungsform einer Luftdüse 28 für das Aufsatzelement 18 und das Schließelement gezeigt, wobei in Fig. 42 und 43 der Verschwenkmechanismus um die Verschwenkachse V gezeigt ist. Das Stellelement 42 erfährt eine Kraftbeaufschlagung und leitet diese an hierzu komplementär ausgebildete Abschnitte des Schließelements 40 weiter. Dieses verschwenkt im Bereich von 0 bis 90°.

In Fig. 38 a und 38b ist weiterhin das Schließelement 30 im geschlossenen, also luftstromdurchlassenden Zustand, gezeigt, welches über Stellelement 42 und Kupplungselement 38 an dem Einsatzelement 52 angeordnet ist. Diese ist über die Rastnasen (nicht gezeigt) an dem Kupplungselement 38 angeordnet.

Im Weiteren ist in Fig. 39 die Kopplung zwischen Schließelement 40 und Aufsatzelement 18 gezeigt. In Fig. 41 - 43 sind unterschiedliche Ansichten des Schließelementes 40 mit daran angeordnetem Stellelement 42 und Kupplungselement 38 gezeigt. Durch die Fixierung des Befestigungselementes 2 innerhalb des Kupplungselementes 38 erfolgt durch Verstellung und/oder Drehung des Aufsatzelementes (nicht gezeigt) eine Rotation um die Längsachse des Befestigungselementes 2, welches das Stellelement 42 in Rotation versetzt, so dass das vorteilhaft doppelseitig ausgebildete Schließelement 40 um die Rotationsachse rotiert, sich aufstellt oder im, wie hier dargestellten, zusammengefalteten Zustand verbleibt. Unterstützt wird diese Bewegung durch die Führungsvorsprünge 44 des Gelenkkopfes 22. Eine weitere Explosionsdarstellung einer weiteren Ausführungsform ist in Fig. 40 gezeigt. Diese Ausführungsform unterscheidet von der in Fig. 34 gezeigten Ausführungsform dahingehend, dass ein zusätzliches Bremselement 50 zur Einstellung der Bedienkraft des Aufsatzelements 18 innerhalb des Kupplungselements 38 angeordnet ist.

Vorteilhaft ist die Luftdüse vollständig aus Kunststoff ausgebildet.

### Bezugszeichenliste

- 1: Gelenkpfannenabschnitt
- 2: Befestigungselement
- 3: Sicherungselement
- 4: Gelenkpfanne
- 6: Öffnung
- 8: Verlängerungsabschnitt
- 10: Ausnehmung, ggf. mit Innengewinde
- 12: Luftdüsengehäuse
- 14: hülsenartiger Abschnitt
- 16: weitere Öffnung
- 18: Aufsatzelement
- 20: Luftleitelement
- 22: Gelenkkopf
- 28: Luftdüse
- 30: Materialverjüngung
- 32: Vorsprung
- 34: Fixierungselement
- 36: Öffnung
- 38: Kupplungselement
- 40: Schließelement
- 42: Stellelement
- 44: Führungsvorsprung
- 46: Rastelement
- 48: Öffnung
- 52: Einsatzelement

## Patentansprüche

1. Luftdüse (28), umfassend
wenigstens ein Luftdüsengehäuse (12), welches zur zumindest teilweisen Aufnahme eines Gelenkpfannenabschnitts (1) ausgebildet ist, wobei das Luftdüsengehäuse (12) einen hülsenartigen Abschnitt (14) zur zumindest teilweisen Aufnahme eines Gelenkpfannenabschnitts (1) umfasst, weiterhin wenigstens ein Aufsatzelement (18) zur Richtungsleitung eines austretenden Luftstromes, welches wenigstens einen Gelenkkopf (22) umfasst,
weiterhin einen Gelenkpfannenabschnitt (1), welcher an einem ersten freien Ende wenigstens eine Gelenkpfanne (4) zur zumindest teilweisen Aufnahme des Gelenkkopfes (22), sowie einen daran anschließenden Verlängerungsabschnitt (8) umfasst, wobei der Verlängerungsabschnitt (8) derart ausgebildet ist, dass er zumindest teilweise in dem hülsenartigen Abschnitt (14) des Luftdüsengehäuses (12) anordenbar ist,
weiterhin ein Befestigungselement (34) zur Fixierung des Gelenkpfannenabschnitt (1) in dem hülsenartigen Abschnitt (14) aufweist, wobei Gelenkkopf (22) und Gelenkpfanne (4) als Gelenkverbindung ausgebildet sind,
wobei der Verlängerungsabschnitt (8) an seinem der Gelenkpfanne (4) gegenüberliegenden freien Ende wenigstens eine Materialverjüngung (30) aufweist, **dadurch gekennzeichnet, dass** im Bereich des freien Endes der Materialverjüngung (30) wenigstens ein Vorsprung (32) angeordnet ist, und
wobei das Befestigungselement (34) auf die Materialverjüngung (30) und auf den wenigstens einen Vorsprung (32) aufsteckbar ist.

2. Luftdüse nach Anspruch 1,
**dadurch gekennzeichnet, dass**
der hülsenartige Abschnitt (14) an seinem einen freien Ende konisch und/oder konvex und/oder konkav gekrümmt ausgebildet ist.

3. Luftdüse nach Anspruch 1,
**dadurch gekennzeichnet, dass**
die Gelenkpfanne (4) in ihrem Durchmesser direkt und/oder indirekt veränderbar ausgebildet ist.

4. Luftdüse nach Anspruch 1,
**dadurch gekennzeichnet, dass**
die Gelenkpfanne (4) wenigstens eine sich in Längsrichtung des Gelenkpfannenabschnitts (1) erstreckende Öffnung (6) aufweist.

5. Luftdüse nach Anspruch 1,
**dadurch gekennzeichnet, dass**
das Befestigungselement (34) als Spannelement ausgebildet ist.

6. Luftdüse nach wenigstens einem der vorangegangenen Ansprüche,
**dadurch gekennzeichnet, dass**
sie weiterhin wenigstens ein Schließelement (40) zur Kontrolle des austretenden Luftstrom aus der Luftdüse (28) aufweist.

7. Luftdüse nach Anspruch 6,
**dadurch gekennzeichnet, dass**
Schließelement (40) über wenigstens ein Kupplungselement (38) und/oder Stellelement (42) mit einem Einsatzelement (52) und/oder dem hülsenartigen Abschnitt (14) verbunden ausgebildet ist.

8. Luftdüse nach Anspruch 1,
**dadurch gekennzeichnet, dass**
die Gelenkverbindung zwischen Gelenkkopf (22) und Gelenkpfanne (4) derart ausgebildet ist, dass das Aufsatzelement (18) zumindest teilweise innerhalb des Luftdüsengehäuses (12) angeordnet und rotierbar ist.

9. Verwendung einer Luftdüse nach wenigstens einem der vorangegangenen Ansprüche als Kugelluftdüse für Heizungs-, Klima- und/oder Belüftungsanlagen im Kraftfahrzeuginnenraum.

## Claims

1. Air vent (28) comprising at least one air vent housing (12), which is constructed for at least partial reception of a joint socket section (1), wherein the air vent housing (12) has a sleeve-like section (14) for at least partial reception of a joint socket section (1),
further comprises at least one top element (18) for directional guidance of an exiting air flow, which comprises at least one joint head (22),
further comprises a joint socket section (1), which at a first free end has at least one joint socket (4) for at least partial reception of the joint head (22) as well as an extension section (8) connected therewith, wherein the extension section (8) is of such a configuration that it can be arranged at least partly in the sleeve-like section (14) of the air vent housing (12),
and further comprises a fastening element (34) for fixing the joint socket section (1) in the sleeve-like section (14),
wherein joint head (22) and joint socket (4) are constructed as a joint connection, and wherein the extension section (8) has at least one material narrowing (30) at its free end opposite the joint socket (4), **characterised in that** at least one projection (32) is arranged in the region of the free end of the material narrowing (30) and wherein the fastening element (34) can be plugged onto the material narrowing (30) and onto the at least one projection (32).

2. Air vent according to claim 1, **characterised in that** the sleeve-like section (14) is formed to be conically and/or convexly and/or concavely curved at its free end.

3. Air vent according to claim 1, **characterised in that** the joint socket (4) is formed to be directly and/or indirectly variable in its diameter.

4. Air vent according to claim 1, **characterised in that** the joint socket (4) has at least one opening (6) extending in longitudinal direction of the joint socket section (1).

5. Air vent according to claim 1, **characterised in that** the fastening element (34) is constructed as a clamping element.

6. Air vent according to at least one of the preceding claims, **characterised in that** it further comprises at least one closing element (40) for controlling the exiting air from the air vent (28).

7. Air vent according to claim 6, **characterised in that** the closing element (40) is constructed to be connected by way of at least one coupling element (38) and/or setting element (42) with an insert element (52) and/or the sleeve-like section (14).

8. Air vent according to claim 1, **characterised in that** the joint connection between joint head (22) and joint socket (4) is so constructed that the top element (18) is arranged and rotatable at least partly within the air vent housing (12).

9. Use of an air vent according to at least one of the preceding claims as a ball air vent for heating, air-conditioning and/or ventilating installations in the interior space of a motor vehicle.

## Revendications

1. Buse à air (28) comprenant
au moins un boîtier de buse à air (12), qui est conçu pour le logement au moins partiel d'une portion de coussinet à rotule (1), le boîtier de buse à air (12) comprenant une portion en forme de manchon (14) pour le logement au moins partiel d'une portion de coussinet à rotule (1),
en outre au moins un élément rapporté (18) pour l'orientation d'un flux d'air sortant, qui comprend au moins une tête d'articulation (22),
en outre au moins une portion de coussinet à rotule (1) qui comprend, au niveau d'une première extrémité libre au moins un coussinet à rotule (4) pour le logement au moins partiel de la tête d'articulation (22), ainsi qu'une portion de prolongement (8) qui s'y raccorde, la portion de prolongement (8) étant conçue de façon à ce qu'elle puisse être disposée au moins partiellement dans la portion en forme de manchon (14) du boîtier de buse à air (12),
en outre un élément de fixation (34) pour la fixation de la portion de coussinet à rotule (1) dans la portion en forme de manchon (14),
la tête d'articulation (22) et le coussinet à rotule (4) étant conçus comme une liaison articulée,
la portion de prolongement (8) comprenant, au niveau de son extrémité libre opposée au coussinet à rotule (4), au moins un rétrécissement de matériau (30), **caractérisé en ce que**, au niveau de l'extrémité libre du rétrécissement de matériau (30) se trouve au moins une saillie (32) et
l'élément de fixation (34) peut être enfiché sur le rétrécissement de matériau (30) et sur l'au moins une saillie (32).

2. Buse à air selon la revendication 1,
**caractérisée en ce que**
la portion en forme de manchon (14) est réalisée avec une courbure conique et/ou convexe et/ou concave au niveau de son extrémité libre.

3. Buse à air selon la revendication 1,
**caractérisée en ce que**
le coussinet à rotule (4) est conçu de façon à ce que son diamètre puisse être modifié directement et/ou indirectement.

4. Buse à air selon la revendication 1,
**caractérisée en ce que**
le coussinet à rotule (4) comprend au moins une ouverture (6) s'étendant dans la direction longitudinale de la portion de coussinet à rotule (1).

5. Buse à air selon la revendication 1,
**caractérisée en ce que**
l'élément de fixation (34) est conçu comme un élément de tension.

6. Buse à air selon au moins l'une des revendications précédentes,
**caractérisée en ce que**
elle comprend en outre au moins un élément de fermeture (40) pour le contrôle du flux d'air sortant de la buse à air (28).

7. Buse à air selon la revendication 6,
**caractérisée en ce que**
l'élément de fermeture (40) est conçu de façon à être relié par l'intermédiaire d'au moins un élément de couplage (38) et/ou un élément de réglage (42) avec un insert (52) et/ou la portion en forme de manchon (14).

8. Buse à air selon la revendication 1,
**caractérisée en ce que**
la liaison articulée entre la tête d'articulation (22) et le coussinet à rotule (4) est conçue de façon à ce que l'élément rapporté (18) soit disposé et puisse tourner au moins partiellement à l'intérieur du boîtier de buse à air (12).

9. Utilisation d'une buse à air selon au moins l'une des revendications précédentes en tant que buse à air sphérique pour des installations de chauffage, de climatisation et/ou de ventilation à l'intérieur de véhicules.
